(19) Europäisches Patentamt
European Patent Office
Office européen des brevets

(11) Veröffentlichungsnummer : **0 170 287**
**B1**

(12) # EUROPÄISCHE PATENTSCHRIFT

(45) Veröffentlichungstag der Patentschrift : **11.11.87**

(51) Int. Cl.[4] : **C 08 G 77/08**, C 08 G 77/32

(21) Anmeldenummer : **85109715.4**

(22) Anmeldetag : **02.08.85**

(54) **Verfahren zum Stabilisieren von Organopolysiloxan.**

(30) Priorität : **02.08.84 DE 3428581**

(43) Veröffentlichungstag der Anmeldung : **05.02.86 Patentblatt 86/06**

(45) Bekanntmachung des Hinweises auf die Patenterteilung : **11.11.87 Patentblatt 87/46**

(84) Benannte Vertragsstaaten :
**DE FR GB IT NL**

(56) Entgegenhaltungen :
**FR-A- 1 434 629**
**FR-A- 2 312 526**
**FR-A- 2 322 163**
**GB-A- 910 513**
**GB-A- 945 810**
**US-A- 4 460 726**

(73) Patentinhaber : **WACKER-CHEMIE GMBH**
**Prinzregentenstrasse 22**
**D-8000 München 22 (DE)**

(72) Erfinder : **Riederer, Manfred, Dr. Dipl.-Chem.**
**Kreislerweg 4**
**D-8263 Burghausen (DE)**

**EP 0 170 287 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Beispielsweise aus US 4 203 913 ist es bekannt, Organopolysiloxane, die durch Kondensation und/oder Äquilibrierung von Organosiliciumverbindungen, die Si-gebundenen Sauerstoff enthalten, mit Phosphornitridchloriden als die Kondensation und/oder Äquilibrierung fördernden Katalysatoren erhalten worden sind und somit vor dem Stabilisieren Phosphornitridchloride bzw. deren die Kondensation oder Äquilibrierung von Organosiloxanen fördernde Umsetzungsprodukte enthalten, mit basischen Stickstoffverbindungen zu vermischen, um durch Umsetzung dieser basischen Stickstoffverbindungen mit den genannten Phosphorverbindungen diese Organopolysiloxane gegenüber Viskositätsänderungen zu stabilisieren.

Es ist Aufgabe der Erfindung, Organopolysiloxane, welche die genannten Phosphorverbindungen enthalten, gegenüber Viskositätsänderungen zu stabilisieren, wobei die stabilisierten Organopolysiloxane auch bei 150 °C mindestens 30 Tage farblos und klar bleiben, bei Raumtemperatur mindestens 6 Monate klar bleiben und bei ihrer endgültigen Anwendung keine Geruchsbelästigung durch bei der Stabilisierung eingesetztes und bei der endgültigen Anwendung möglicherweise frei werdendes Amin entstehen kann. Diese Aufgabe wird durch die Erfindung gelöst.

Gegenstand der Erfindung ist ein Verfahren zum Stabilisieren von Organopolysiloxanen, die vor dem Stabilisieren Phosphornitridchloride bzw. deren die Kondensation oder Äquilibrierung oder die Kondensation und Äquilibrierung von Organopolysiloxanen fördernde Umsetzungsprodukte enthalten, gegenüber Viskositätsänderungen durch Umsetzung der genannten Phosphorverbindungen mit anderen Verbindungen, dadurch gekennzeichnet, daß die genannten Phosphorverbindungen mit mindestens einer Lithiumverbindung umgesetzt werden, die bei der Umsetzung mit an Phosphor direkt gebundenem Chlor Lithiumchlorid ergibt.

Die Organopolysiloxane, die erfindungsgemäß gegenüber Viskositätsänderungen stabilisiert werden, sind vorzugsweise solche der allgemeinen Formel

$$AO(SiR_2O)_mA$$

In dieser Formel bedeutet R gleiche oder verschiedene, einwertige gegebenenfalls substituierte Kohlenwasserstoffreste oder Wasserstoff mit der Maßgabe, daß an jedes Siliciumatom, an das Wasserstoff unmittelbar gebunden ist, auch ein Kohlenwasserstoffrest gebunden ist, A Wasserstoff oder einen Rest der Formel

$$—SiR_aR'_{3-a}$$

wobei R die vorstehend dafür angegebene Bedeutung hat, R' ein einwertiger, über Sauerstoff an das Silicium gebundener, gegebenenfalls substituierter Kohlenwasserstoffrest, a 0, 1, 2 oder 3 und m eine ganze Zahl im Wert von mindestens 50 ist.

Obwohl durch derartige, häufig verwendete Formeln nicht dargestellt, können bis zu 5 Molprozent der Einheiten der Formel $SiR_2O$ durch andere, meist jedoch nur als mehr oder weniger schwer vermeidbare Verunreinigungen vorliegende Siloxaneinheiten, wie Einheiten der Formel $RSiO_{3/2}$, wobei R die oben dafür angegebene Bedeutung hat, oder $SiO_{4/2}$-Einheiten oder Monoorganosiloxaneinheiten der vorstehend angegebenen Formel und $SiO_{4/2}$-Einheiten ersetzt sein.

Beispiele für einwertige Kohlenwasserstoffreste R oder für SiC-gebundene Kohlenwasserstoffreste in den erfindungsgemäß zu stabilisierenden Organopolysiloxanen sind Alkylreste, wie der Methyl-, Ethyl-, n-Propyl-, Isopropyl-, n-Butyl- und sec.-Butylrest ; Alkenylreste, wie der Vinyl- und Allylrest ; Arylreste, wie der Phenylrest ; Alkarylreste, wie Tolyl- und Xylylreste ; und Aralkylreste, wie der Benzylrest.

Beispiele für einwertige, substituierte Kohlenwasserstoffreste R oder für SiC-gebundene, substituierte Kohlenwasserstoffreste in den erfindungsgemäß zu stabilisierenden Organopolysiloxanen sind Cyanalkylreste, wie der beta-Cyanethylrest, und halogenierte Kohlenwasserstoffreste, wie Halogenalkylreste, z. B. der 3,3,3-Trifluorpropylrest, und Halogenarylreste, z. B. o-, m- und p-Chlorphenylreste.

Wegen der leichteren Zugänglichkeit sind vorzugsweise mindestens 50 % der Anzahl der SiC-gebundenen organischen Reste in den erfindungsgemäß zu stabilisierenden Organopolysiloxanen Methylreste. Die gegebenenfalls vorliegenden übrigen SiC-gebundenen organischen Reste sind vorzugsweise Vinyl- oder Phenylreste. Außerdem kann auch die Anwesenheit von Si-gebundenem Wasserstoff bevorzugt sein.

Beispiele für über Sauerstoff an das Silicium gebundene substituierte und unsubstituierte Kohlenwasserstoffreste R' sind der Methoxy-, Ethoxy- und der Methoxyethylenoxyrest ($CH_3OCH_2CH_2O—$).

Die Viskosität der Organopolysiloxane, gegenüber deren Änderung die Organopolysiloxane erfindungsgemäß stabilisert werden können, beträgt meist $1 \cdot 10^3$ bis $5 \cdot 10^7$mPa · s bei 25 °C.

Die größte Bedeutung hat das erfindungsgemäße Verfahren für solche Organopolysiloxane der oben angegebenen Formel, worin A Wasserstoff oder ein Rest der Formel $—SiR_3$, wie trimethylsilyl oder Dimethylvinylsilyl ist, oder ein Teil der A Wasserstoff bedeutet und die übrigen A Reste der Formel $—SiR_3$ bedeuten.

Es kann eine Art von Organopolysiloxan stabilisiert werden ; es können aber auch Gemische aus mindestens zwei verschiedenen Arten von Organopolysiloxanen stabilisiert werden.

Bei den Phosphornitridchloriden, welche die Organopolysiloxane, die erfindungsgemäß gegenüber Viskositätsänderungen stabilisiert werden, enthalten, kann es sich um solche handeln, die durch Umsetzung von 400 Gewichtsteilen Phosphorpentachlorid mit 130 Gewichtsteilen Ammoniumchlorid hergestellt worden sind (vgl. z. B. « Berichte der Deutschen Chemischen Gesellschaft », 57. Jahrgang, 1924, Seite 1345), und/oder um solche handeln, welche durch Umsetzung von 2 Mol Phosphorpentachlorid mit 1 Mol Ammoniumchlorid erhältlich sind (vgl. z. B. US 3 839 388, ausgegeben 1. Oktober 1974, S. Nitzsche et al., Wacker-Chemie GmbH). Bevorzugt sind Phosphornitridchloride der letzteren Art.

Ob Organopolysiloxane, die durch Kondensation oder Äquilibrierung oder durch Kondensation und Äquilibrierung von Organosiliciumverbindungen, die Si-gebundenen Sauerstoff enthalten, mit Phosphornitridchloriden erhalten worden sind, vor dem Stabilisieren tatsächlich Phosphornitridchloride enthalten oder zusätzlich zu Phosphornitridchloriden oder anstelle von Phosphornitridchloriden deren die Kondensation oder Äquilibrierung oder die Kondensation und Äquilibrierung fördernde Umsetzungsprodukte mit Organopolysiloxan enthalten, ist nicht geklärt. Folglich kann auch die Art dieser Umsetzungsprodukte nicht angegeben werden. Das Vorliegen solcher Umsetzungsprodukte in Organopolysiloxanen, die durch Kondensation oder Äquilibrierung von Organosiliciumverbindungen, die Si-gebundenen Sauerstoff enthalten, mit Phosphornitridchloriden erhalten worden sind, vor dem Stabilisieren dürfte aber auch nicht völlig ausgeschlossen werden können.

Die Herstellung von Phosphornitridchloride oder deren die Kondensation oder Äquilibrierung von Organopolysiloxanen fördernde Umsetzungsprodukte enthaltenden Organopolysiloxanen ist allgemein bekannt und beispielsweise in US 2 830 967, US 2 990 419, US 3 186 967, GB 1 049 188, US 3 398 176, US 3 706 775, US 3 652 711, CA 809 229, sowie US 3 839 388, eingehend beschrieben.

Bei der Herstellung von Phosphornitridchloriden bzw. deren die Kondensation oder Äquilibrierung oder Kondensation und Äquilibrierung von Organopolysiloxanen fördernde Umsetzungsprodukte enthaltenden Organopolysiloxanen werden die Phosphornitridchloride vorzugsweise in Mengen von 0,001 bis 0,05 Gewichtsprozent, insbesondere von 0,02 bis 0,03 Gewichtsprozent, jeweils bezogen auf das Gesamtgewicht der Organosiliciumverbindungen, deren Kondensation und/oder Äquilibrierung gefördert werden soll eingesetzt.

Bevorzugt als Lithiumverbindungen, die bei der Umsetzung mit an Phosphor direkt gebundenem Chlor Lithiumchlorid ergibt, ist Lithiumhydroxyd. Das Lithiumhydroxyd kann auch in situ durch die Umsetzung von Wasser, das von der Kondensation der Organopolysiloxane her ebenfalls vorhanden ist, mit z. B. n-Butyllithium gebildet werden.

Weitere Beispiele für Lithiumverbindungen, die bei der Umsetzung mit an Phosphor direkt gebundenem Chlor Lithiumchlorid bzw. durch Umsetzung mit Wasser, das von der Kondensation der Organopolysiloxane her ebenfalls vorhanden ist, Lithiumhydroxyd ergeben, sind Lithiumcarbonat, Lithiumhydrogencarbonat, Lithiumoxyd, Lithiumhydrid, Lithiumformiat, Lithiumacetat, Lithiummethylat, Lithiumethylat und Lithiummethylsilikonat.

Es kann eine Art von Lithiumverbindung, die bei der Umsetzung mit an Phosphor direkt gebundenem Chlor Lithiumchlorid ergibt, es kann aber auch ein Gemisch aus mindestens zwei verschiedenen Arten von Lithiumverbindungen, die bei der Umsetzung mit an Phosphor direkt gebundenem Chlor Lithiumchlorid ergeben, verwendet werden. Vorzugsweise wird Lithiumverbindung in Mengen von 1 bis 5 Grammatom darin vorhandenen Lithiums je Grammatom Phosphor in den zur Herstellung der Organopolysiloxane eingesetzten Phosphornitridchloriden eingesetzt.

Zur besseren Verteilung und einfacheren Dosierung kann bei dem erfindungsgemäßen Verfahren die Lithiumverbindung in Form einer Lösung in einem gegenüber dieser Verbindung inerten Lösungsmittel eingesetzt werden. Ein Beispiel für ein derartiges Lösungsmittel ist Wasser bei Lithiumhydroxyd. Bei n-Butyllithium sind n-Pentan sowie bei Raumtemperatur flussiges durch Trimethylsiloxygruppen endblockiertes Dimethylpolysiloxan Beispiele für derartige Lösungsmittel. Es können auch Suspensionen von z. B. Lithiumhydroxyd z. B. in bei Raumtemperatur flüssigem, durch Trimethylsiloxygruppen endblockiertem Dimethylpolysiloxan verwendet werden.

Vorzugsweise wird das erfindungsgemäße Verfahren bei 0 °C bis 200 °C, insbesondere bei Raumtemperatur bis 180 °C, durchgeführt. Das erfindungsgemäße Verfahren kann beim Druck der umgebenden Atmosphäre, also z. B. bei 1 020 hPa (abs.), oder bei höheren oder niedrigeren Drücken durchgeführt werden. Das erfindungsgemäße Verfahren kann absatzweise, halbkontinuierlich oder vollkontinuierlich durchgeführt werden.

Um eine gute Verteilung der bei dem erfindungsgemäßen Verfahren verwendeten Stoffe ineinander zu gewährleisten, wird das Gemisch aus Phosphornitridchloride bzw. deren die Kondensation und/oder Äquilibrierung von Organopolysiloxanen fördernde Umsetzungsprodukte enthaltenden Organopolysiloxanen und erfindungsgemäß verwendeter Lithiumverbindung vorzugsweise bewegt, beispielsweise in einem Planetenmischer, einem Doppelschneckenkneter oder einer Zahnradpumpe.

Die erfindungsgemäß stabilisierten Organopolysiloxane können für alle Zwecke verwendet werden, bei denen auch die nach den bisher bekannten Verfahren stabilisierten Organopolysiloxane eingesetzt werden konnten, z. B. als Fadengleitmittel, zur Herstellung von Organopolysiloxanelastomeren und zur Herstellung von klebrige Stoffe abweisenden Überzügen.

Das in den folgenden Beispielen verwendete Phosphornitridchlorid wurde hergestellt wie folgt:

Ein Gemisch aus 417 g (2 Mol) Phosphorpentachlorid und 53,5 g (1 Mol) Ammoniumchlorid in 1 000 ml Tetrachlorethan wird 12 Stunden zum Sieden unter Rückfluß erwärmt. Aus der so erhaltenen, hellgelben Lösung werden bei 160 °C und unter Erniedrigung des Drucks bis auf etwa 1,33 hPa (abs.) die flüchtigen Anteile entfernt. Als Rückstand verbleiben gelbliche Kristalle, die im wesentlichen aus der Verbindung der Formel

$$Cl_3PNPCl_2NPCl_3 \cdot PCl_6$$

bestehen.

## Beispiel 1

a) In einem Kneter wird ein Gemisch aus 2 600 g eines in den endständigen Einheiten je eine Si-gebundene Hydroxylgruppe aufweisenden Dimethylpolysiloxans mit einer Viskosität von 100 $mm^2 \cdot s^{-1}$ bei 25 °C, 325 g eines durch Trimethylsiloxygruppen endblockierten Dimethylpolysiloxans mit einer Viskosität von 20 $mm^2 \cdot s^{-1}$ bei 25 °C und 5,72 ml einer 0,825 gewichtsprozentigen Lösung des Phosphornitridchlorids in Methylenchlorid solange bei 13 hPa (abs.) auf 80 °C erwärmt, bis ein durch Trimethylsiloxygruppen endblockiertes Dimethylpolysiloxan mit einer Viskosität von 1 000 mPa · s bei 25 °C vorliegt.

b) In die gesamte Menge des so erhaltenen Organopolysiloxans werden bei Raumtemperatur und etwa 1 000 hPa (abs.) 0,29 g einer 15 gewichtsprozentigen Lösung von n-Butyllithium in n-Pentan eingeknetet und anschließend das Pentan bei $10^{-3}$ hPa (abs.) verdampfen gelassen.

Das so stabilisierte Organopolysiloxan ist klar und farblos. Auch nach 12 Monaten Lagerung dieses Organopolysiloxans bei Raumtemperatur ist keine Änderung der Viskosität und des Aussehens dieses Organopolysiloxans festzustellen.

## Beispiel 2

a) In einem Doppelschneckenkneter mit einer bei 150 °C und 6,7 hPa (abs.) gehaltenen, 140 cm langen Reaktionszone werden kontinuierlich 100,0 kg je Stunde eines in den endständigen Einheiten je eine Si-gebundene Hydroxylgruppe aufweisenden Dimethylpolysiloxans mit einer Viskosität von 140 $mm^2 \cdot s^{-1}$ bei 25 °C 6,25 kg je Stunde eines durch Trimethylsiloxygruppen endblockierten Dimethylpolysiloxans mit einer Viskosität von 20 $mm^2 \cdot s^{-1}$ bei 25 °C und 220 ml je Stunde der 0,825 gewichtsprozentigen Lösung des Phosphornitridchlorids in Methylenchlorid eingespeist. Über eine Austragsschnecke gelangt in das Austragsrohr ein durch Trimethylsiloxygruppen endblockiertes Dimethylpolysiloxan mit einer Viskosität von 20 000 mPa · s bei 25 °C.

b) Mittels einer Zahnradpumpe wird am Austragsrohr das so erhaltene Organopolysiloxan, das noch eine Temperatur von fast 150 °C aufweist, mit 220 ml je Stunde einer Lösung, die aus 1,7 g n-Butyllithium, 9,65 g n-Pentan und 208,65 g durch Trimethylsiloxygruppen endblockiertes Dimethylpolysiloxan mit einer Viskosität von 350 mPa · s bei 25 °C besteht und wobei die 220 ml 0,185 g Lithium entsprechen, vermischt.

Das so stabilisierte Organopolysiloxan ist klar und farblos. Auch nach 12 Monaten Lagerung dieses Organopolysiloxans bei Raumtemperatur ist keine Änderung der Viskosität und des Aussehens dieses Organopolysiloxans festzustellen.

## Beispiel 3

Die in Beispiel 1 beschriebene Arbeitsweise wird wiederholt mit den Abänderungen, daß 0,65 ml einer 25 gewichtsprozentigen Lösung des Phosphornitridchlorids in Methylenchlorid anstelle der 5,72 ml der 0,825 gewichtsprozentigen Lösung des Phosphornitridchlorids, in Stufe b) nicht die gesamte Menge des in Stufe a) erhaltenen Organopolysiloxans, sondern nur 260 g dieses Organopolysiloxans und 0,26 ml einer 25 gewichtsprozentigen Lösung von Lithiumhydroxyd in Wasser anstelle der in Beispiel 1 verwendeten Lösung von Butyllithium verwendet werden.

Das so stabilisierte Organopolysiloxan ist klar und farblos. Auch nach 6 Monaten Lagerung dieses Organopolysiloxans bei Raumtemperatur ist keine Änderung der Viskosität und des Aussehens dieses Organopolysiloxans festzustellen. Die Ergebnisse der weiteren Stabilisierung sind in der weiter unten folgenden Tabelle angegeben.

Vergleichsversuch

Die in Beispiel 3 angegebene Arbeitsweise wird wiederholt mit der Abänderung, daß 0,26 ml einer 25 gewichtsprozentigen Lösung von tert.-Octylamin in Methylenchlorid anstelle der Lösung von Lithiumhydroxyd verwendet werden.

Das so stabilisierte Organopolysiloxan ist klar und farblos. Nach 6 Monaten Lagerung dieses Organopolysiloxans hat es zwar immer noch die Viskosität von 1 000 mPa · s und es ist auch noch farblos. Es ist aber nach dieser Lagerung trüb. Die Ergebnisse der weiteren Stabilitätsprüfungen sind in der Tabelle angegeben.

Tabelle

| | Aussehen des Organopolysiloxans nach | | | |
|---|---|---|---|---|
| | 6 Monaten bei -20°C | | 30 Tagen bei 150°C | |
| Beispiel | farblos | klar | farblos | klar |
| Vergleichsversuch | farblos | trüb | farblos | trüb |

Beispiel 4

a) In den Doppelschneckenkneter mit einer bei 150 °C und 6,7 hPa (abs.) gehaltenen, 140 cm langen Reaktionszone werden kontinuierlich 100 kg je Stunde eines in den endständigen Einheiten je eine Si-gebundene Hydroxylgruppe aufweisenden Dimethylpolysiloxans mit einer Viskosität von 95 $mm^2 \cdot s^{-1}$ bei 25 °C und 70 ml je Stunde einer 2,5 gewichtsprozentigen Lösung des Phosphornitridchlorids in Methylenchlorid eingespeist. Über eine Austragsschnecke gelangt in das Ausgangsrohr ein in den endständigen Einheiten je eine Si-gebundene Hydroxylgruppe aufweisendes Dimethylpolysiloxan mit einem im Brabender-Plastograph bei 25 °C und 60 Umdrehungen je Minute bestimmten Wert von 5 200 Nm.

b) Mittels einer Zahnradpumpe wird am Austragsrohr das so erhaltene hochviskose Organopolysiloxan, das noch eine Temperatur von fast 150 °C aufweist, mit 140 ml je Stunde einer 5 gewichtsprozentigen Lösung von Lithiumhydroxyd in Wasser vermischt.

Das so stabilisierte Organopolysiloxan ist klar und farblos. Auch nach 6 Monaten Lagerung dieses Organopolysiloxans bei Raumtemperatur ist keine Änderung der Viskosität und des Aussehens dieses Organopolysiloxans festzustellen.

**Patentansprüche**

1. Verfahren zum Stabilisieren von Organopolysiloxanen, die vor dem Stabilisieren Phosphornitridchloride bzw. deren die Kondensation oder Äquilibrierung oder die Kondensation und Äquilibrierung von Organopolysiloxanen fördernde Umsetzungsprodukte mit Organopolysiloxanen enthalten, gegenüber Viskositätsänderungen durch Umsetzung der genannten Phosphorverbindungen mit anderen Verbindungen, dadurch gekennzeichnet, daß die genannten Phosphorverbindungen mit mindestens einer Lithiumverbindung umgesetzt werden, die bei der Umsetzung mit an Phosphor direkt gebundenem Chlor Lithiumchlorid ergibt.

2. Verfahren nach Anspruch 1, dadurch gekennzeichnet, daß als Lithiumverbindung Lithiumhydroxyd verwendet wird.

3. Verfahren nach Anspruch 1 oder 2, dadurch gekennzeichnet, daß Lithiumverbindung in Mengen von 1 bis 5 Grammatom darin vorhandenen Lithiums je Grammatom Phosphor in den zur Herstellung der Organopolysiloxane eingesetzten Phosphornitridchloriden eingesetzt wird.

**Claims**

1. Process for stabilising, against changes in viscosity, organopolysiloxanes which, before stabilisation, contain phosphonitrilic chlorides or reaction products thereof with organopolysiloxanes, which reaction products promote condensation or equilibration, or condensation and equilibration, of organopolysiloxanes, by reacting the mentioned phosphorus compounds with other compounds, characterised in that the phosphorus compounds mentioned are reacted with at least one lithium compound which yields lithium chloride on reaction with chlorine bonded directly to phosphorus.

2. Process according to claim 1, characterised in that lithium hydroxide is used as lithium compound.

3. Process according to claim 1 or 2, characterised in that the lithium compound is used in amounts of from 1 to 5 gram-atoms of lithium present therein per gramatom of phosphorus in the phosphonitrilic chlorides used for the manufacture of the organopolysiloxanes.

**Revendications**

1. Procédé pour stabiliser, contre des modifications de leur viscosité, des polyorganosiloxanes qui contiennent avant la stabilisation des dichlorures de phosphonitrile ou leurs produits de réaction, sur des polyorganosiloxanes, promoteurs de la condensation ou de l'équilibrage, ou de la condensation et de l'équilibrage de polyorganosiloxanes, par réaction de ces composés du phosphore sur d'autres composés, caractérisé en ce qu'on met à réagir les composés du phosphore mentionnés ci-dessus sur au moins un composé du lithium, qui, lors de la réaction sur du chlore directement lié au phosphore, donne du chlorure de lithium.

2. Procédé selon la revendication 1, caractérisé en ce qu'on utilise comme composé du lithium de l'hydroxyde de lithium.

3. Procédé selon les revendications 1 ou 2, caractérisé en ce qu'on utilise le composé du lithium en des quantités de 1 à 5 atomes-grammes du lithium qui y est contenu, par atome-gramme de phosphore dans les dichlorures de phosphonitrile utilisés pour la préparation des polyorganosiloxanes.